(19) Europäisches Patentamt
European Patent Office
Office européen des brevets

(11) **EP 2 722 654 B1**

(12) **EUROPEAN PATENT SPECIFICATION**

(45) Date of publication and mention
of the grant of the patent:
**07.03.2018 Bulletin 2018/10**

(51) Int Cl.:
***G01F 1/66*** *(2006.01)*

(21) Application number: **13187401.8**

(22) Date of filing: **04.10.2013**

(54) **Fluid flow metering apparatus**

Fluidflussmessvorrichtung

Appareil de mesure de débit de fluide

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.10.2012 GB 201218898**

(43) Date of publication of application:
**23.04.2014 Bulletin 2014/17**

(73) Proprietor: **Secure International Holdings Pte. Ltd.
Singapore 068914 (SG)**

(72) Inventors:
• **Thompson, Peter Robert
Southampton, Hampshire SO31 9DE (GB)**
• **Dubey, Vimal
Winchester, Hampshire SQ23 7RX (GB)**

(74) Representative: **Patel, Nikesh et al
A.A. Thornton & Co.
10 Old Bailey
London EC4M 7NG (GB)**

(56) References cited:
**EP-A1- 1 921 424      GB-A- 2 209 217
GB-A- 2 275 108      GB-A- 2 321 705
US-A- 4 365 518**

EP 2 722 654 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to fluid flow and particularly to monitoring fluid flow in ultrasonic fluid flow meters such as gas meters.

An ultrasonic fluid flow meter typically comprises a flow passage embracing a measuring section wherein a pair of ultrasonic transducers mounted at each end of the measuring section is used to generate ultrasonic signals. These signals propagate along the flow direction (downstream) and the opposite direction against the flow direction (upstream). Each signal is normally transmitted each way alternately. The time taken for the ultrasonic signals to travel both downstream and upstream is measured (the transit times) and, together with the difference in times and the distance covered, is used to calculate the fluid velocity. Alternatively, the speed of sound (SoS) in the fluid can be used in the calculation instead of the total time. A third, independent, transducer can be used to determine the SoS in a separate measuring cell within the fluid envelope.

The measuring section is typically in the form of a tube along which the fluid being measured is flowing. The fluid is directed through the tube in order to confine it during the measurement and to speed up the flow to increase the measurement accuracy. Such a flow meter is known as a transit-time flow meter or time of flight meter. Where the flow meter is a gas meter, the fluid is typically natural gas.

One technique currently in use for generating a signal to drive the transmitting transducer involves the use of a single pulse, usually of high voltage, to drive the transmitting transducer and directly timing the reception of one of the received edges. The transducers are tuned to a high frequency eg. 200kHz or above. The received signal at the receiving transducer is of very small amplitude and consists of a short series of sine waves rapidly increasing in amplitude before decaying. The time is measured from the moment of transmission to a known threshold level or zero crossing on the received signal burst. It is extremely difficult to detect the start of this received burst and the second or third cycle is usually detected. The frequency of the sine waves depends on the response of the transducers used and can vary causing uncertainty in the measured value. The signal has a poor Signal to Noise Ratio (SNR) and the single detection point is susceptible to noise so averaging of a considerable number of measurements is required. The signal amplitude losses are also influenced by the gas, natural gas has a very high methane content which attenuates high frequencies, so the signal changes its nature and amplitude with gas type. Pulses typically have high bandwidth and avoid the generation of modes.

Another technique to drive the transmitting transducer involves a burst of several cycles, usually at a frequency tuned to the maximum response of the transducers. The signal at the receiving transducer increases in amplitude as the burst increases in duration until a maximum is reached. The time taken to reach maximum amplitude depends on the bandwidth of the whole system, mainly restricted by the transducer bandwidths. Not all signals have been designed to reach maximum received amplitude. When the transmitted signal ends the system continues to ring at a frequency determined by the transducer responses, gradually decaying, until the energy is dissipated.

GB2321705A relates to a method of, and apparatus for, measuring the acoustic impedance of, the density of, or mass of a flowing fluid comprising providing a first transducer coupled to a matching block and a second transducer coupled to a second matching block, the two blocks being spaced apart. The matching blocks may be made of a plastic material. A fluid under test is provided between the blocks, and a first ultrasonic signal is generated in a first direction in the first block. Resultant signals are detected by the first transducer and the second transducer. Similarly, a second acoustic signal is generated in the second block by the second transducer and the resultant signals are detected by the first transducer and the second transducer (i.e. two directional measurements are made). A combination of the signals from both directions can then be processed to provide a measure of the acoustic impedance/density/mass flow of the fluid independent of any coupling losses which arise between the blocks and the fluid. WO99/51944A relates to an ultrasound flow meter containing a first and second sensor which may be alternately activated as transmitters or act as receivers, and a transmit generator for generating different excitation functions. The received signals are correlated with each other by computer using the delay correlation method. The objective is to improve accuracy using simple means and, to this end, the sensors, when activated as transmitters, are subjected to wide-band excitation for maximum detection and narrow-band excitation for fine time resolution. The inventors have determined that one drawback of the conventional frequency burst method is that the signal received at the receiving transducer will vary based on the properties such as the bandwidth and resonant frequency of the transducers.

From a first aspect, the present invention provides a fluid flow metering apparatus comprising a flow passage within which fluid is adapted to flow, and means for propagating an ultrasonic signal through the flow passage, the propagating means comprising a first transducer for sending an ultrasonic signal downstream of the flow and a second transducer for sending a signal upstream of the flow, the apparatus further comprising signal processing circuitry to cause the ultrasonic signal to be transmitted in both directions through the flow passages by the first and second transducers and a processing means to determine information representative of the time of flight of the ultrasonic signals received by the first and second transducers, wherein the signal processing circuitry is operable to provide a drive signal which comprises a band of frequencies, characterised in that a) said drive signal changes its bandwidth with time, narrowing as time elapses, and b) wherein the drive signal is chosen to be of duration such that before the end of signal its bandwidth lies within the apparatus bandwidth.

Further optional features are provided in the appended dependent claims.

The drive signal is preferably a sine wave.

The diameter of the flow passage may be comparable to or smaller than the cut-off size for the band of frequencies. In one embodiment, the flow structure comprises a plurality of such flow passages, optionally seven flow passages. Each flow passage preferably has a hexagonal cross section. The flow passages can be coupled together to provide the flow structure with seven flow passages.

At the inlet of the flow structure, a guide structure may be provided to guide the fluid flow into the flow structure. The guide structure is preferably an acoustically transparent flange arranged to prevent reflection of the ultrasonic signal from the first transducer.

The first and second transducers are preferably mounted along the longitudinal axis of the flow structure but sufficiently far away from the inlet and outlet respectively of the flow structure such that disturbance of the fluid flow through the meter is avoided.

In an example, a fluid flow metering apparatus can be provided comprising flow structure comprising a plurality of flow passages within which fluid is adapted to flow, and means for propagating an ultrasonic signal through the flow passage, the propagating means comprising a first transducer for sending an ultrasonic signal downstream of the flow and a second transducer for sending a signal upstream of the flow. A transmitting means is provided to cause the ultrasonic signal to be transmitted in both directions through the flow passages by the first and second transducers and a processing means is provided to determine information representative of the time of flight of the ultrasonic signals received by the first and second transducers. Each flow passage has an identical hexagonal cross section along its length.

Preferred embodiments of the present invention will now be described, by way of example only, with reference to the following drawings in which:

Fig. 1 shows a schematic view of a first embodiment of a fluid flow meter;
Fig. 2 shows an example signal burst used in the meter of Fig. 1;
Fig. 3 shows an example received waveform provided by the meter of Fig. 1;
Fig. 4 shows an end cross sectional view taken along the line D-D of Fig. 1;
Fig.5 shows a perspective view of a fluid flow meter similar to that in Fig. 1 with certain features omitted; and
Fig. 6 is an alternative embodiment of the tube shown in Fig. 1, 2 and 5.

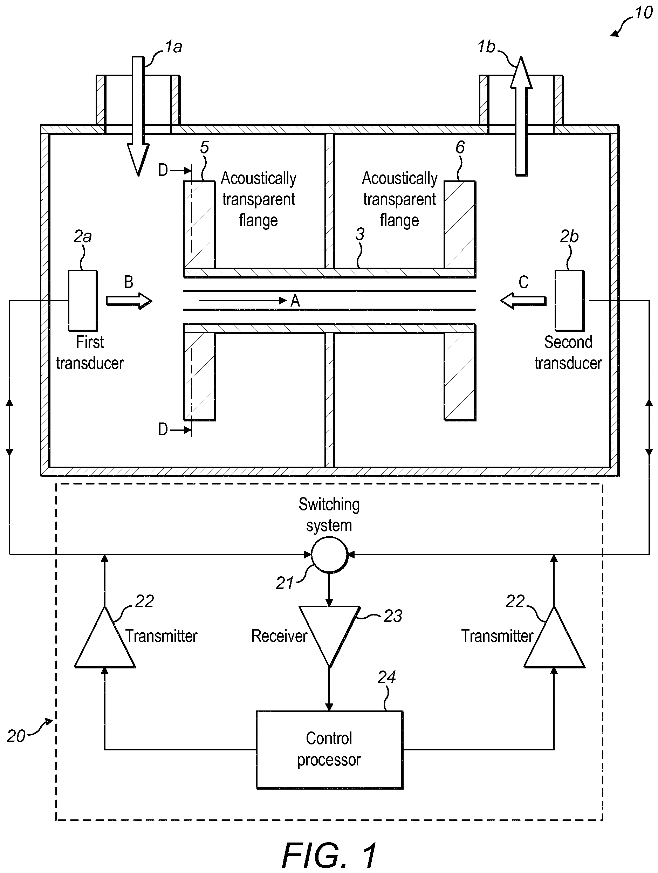

In a first embodiment shown in Fig. 1, a fluid flow meter 10 comprises a housing having an inlet 1a for receiving fluid into the housing and an outlet 1b for expelling fluid from the housing. A measuring flow tube 3 is located within the meter 10 and the internal structure of the housing is such that the fluid can flow through the tube 3. The tube 3 is a flow structure of generally cylindrical shape and its longitudinal axis is rectilinear and generally perpendicular to the axis of the inlet 1a and outlet 1b. The fluid is preferably gas and flows in direction A through the tube 3.

Also provided within the housing are a plurality of transducers 2a,2b located with respect to the tube 3 so as to provide an ultrasonic signal through the tube 3. In this embodiment, each transducer 2a,2b is arranged on the tube 3 longitudinal axis spaced away from each end of the face of the tube 3 but the invention is not limited to this location. The gap is such as to allow the fluid flow to establish itself at the inlet of the tube 3 and dissipate at the outlet of the tube 3 without changing its path substantially with change of flow rate. A preferable distance is in the range of 15mm to 25 mm and more preferably 20mm. Much closer than this can cause a gas velocity dependent error in measurement and too far can mean the signal from the transducers 2a,2b not reaching the tube 3 to a sufficient extent..

The transducers 2a,2b are adapted to alternately transmit the ultrasonic signals through the tube in different directions. Transducer 2a is arranged to transmit ultrasonic signal B downstream (in the direction of flow of fluid) and transducer 2b is arranged to transmit ultrasonic signal C upstream (opposite to the direction of flow of fluid).

Transducers 2a, 2b can also receive the respective signals C,B, such that they act like transceivers.

To avoid acoustic reflections re-entering the tube 3 during the duration of a signal burst, each transducer 2a,2b is placed in free space sufficiently far away from reflective surfaces within the housing.

Signal processing circuitry 20 and a battery (not shown) are located outside the tube 3 and the processing circuit 20 is used for generating and analysing measurement signals from the tube 3 and calculating the result. The circuitry 20 may be located inside or outside the housing of the flow meter 10.

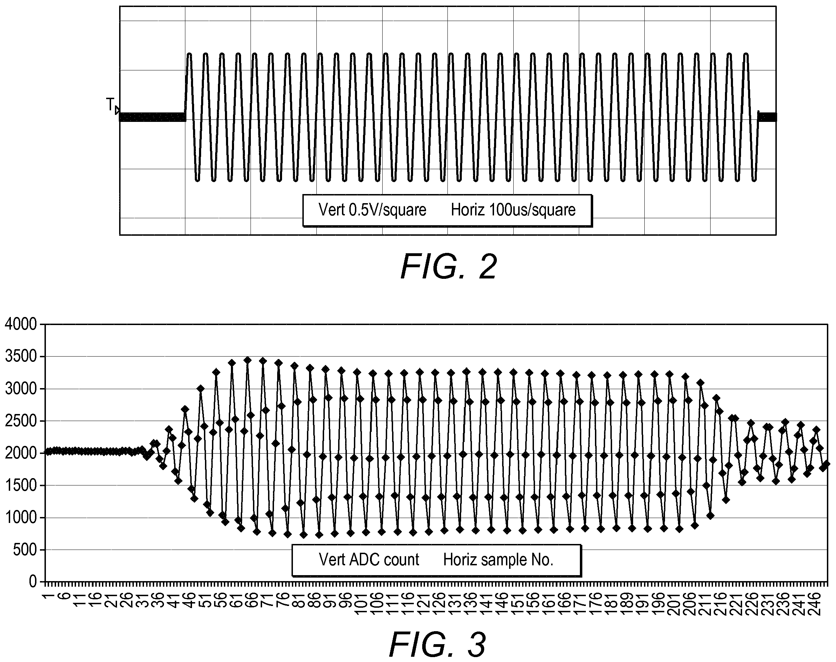

In order to drive the transducers 2a,2b, a frequency burst method is used having a sufficient burst length to allow the receiving amplitude to stabilise plus a set of cycles used in the measurement, typically the stabilisation will occur after between 25 and 35 cycles. As it is a burst, the signal consists of a band of frequencies which changes its bandwidth with time, narrowing as time elapses. Specifically, it is a single fixed drive signal rather than a single frequency of varying amplitude or multiple signals including separate wideband and narrowband signals . An example of a signal burst is shown in Fig. 2.

A sine wave drive signal is preferably provided to the transducers 2a,2b to decrease the bandwidth as much as possible.

When the received signal at a transducer is long enough, it is within the system bandwidth, particularly the transducers' bandwidth. Fig. 3 shows an example of a received signal waveform after it has been sampled by an ADC and then reconstructed from its samples by joining the dots of the sampled output. The signal bandwidth will fall within the system bandwidth and the received signal frequency will stabilise at the transmitted frequency since it is within the system bandwidth. The received signal therefore becomes the originally transmitted signal. The signal now depends only on the properties of the transmitted signal and not the properties of the transducers and is therefore independent of the transducer's properties. The transmitted signal is controllable whilst the transducers are bought-in devices having manufacturing variability over which there is little control. The received signal phase has stabilised since the frequency has stabilised. The burst duration is sufficient such that the phase measurement data can be collected from the latter part of the signal burst, having achieved the bandwidth requirement of falling within the system bandwidth described above and thus having stabilised both in frequency and phase, giving an accurate and stable measurement. This phase is used as a measurement tool as it gives a true representation of the original transmitted signal.

The signal processing circuitry 20 is arranged to connect the transducers 2a,2b with a switching system 21, alternately as transmitters and receivers so that signals can be passed either way through the fluid flow tube 3. In the frequency burst system, the received signal can be typically amplified with a receiving amplifier 23 and then digitised with an ADC. The digital signal can then be operated upon to extract the timing information. A further calculation derives the gas velocity and thence the gas volume. The measurement is not continuous but recurs at a suitable interval to ensure that expected variations in gas flow can be accurately established.

In this embodiment, a microcontroller 24 with on-chip DAC and ADC provides the transmit signal, digitises the received signal, controls switching and processes the data to work out the transit times, SoS, gas velocity and hence gas volume. An on-chip LCD driver (not shown) presents the current index reading to the user. The microprocessor may also communicate with external devices and control the flow of gas with a valve (not shown) which can be provided in the housing of the flow meter 10 such as at the inlet 1a. In such an embodiment, appropriate connections would be provided between the microcontroller 26 and the valve. A temperature sensing element (not shown) may be included capable of measuring the temperature of the flowing gas and communicating it to the microprocessor 26. This measured temperature can be used to calculate an alternative volume which represents the gas volume at a defined standard temperature, a method known as Temperature Correction. Other forms of processor or circuitry may be provided to achieve the functionality of the microprocessor, however, it has been found that the microprocessor is advantageous in this arrangement.

The transducers 2a,2b are arranged such that they connect to a transmitter 22 with one pin and a receiver 23 with the other pin. Switches are provided in the switching system such that they connect each transducer 2a,2b pin to ground, shorting either the transmitter 22 output during reception or the receiver 23 input during transmission.

The input impedance is low, approximately 5 ohms, by virtue of the receiver 23 being a transimpedance amplifier with heavy negative feedback. A common amplifier chain is used in order to avoid propagation delay differences between the transducers. The transmitter 22 has an output impedance which is low, driven from the output of an opamp in unity gain configuration. The amplifiers used have very high frequency response compared to the signal frequencies in use in order to minimise propagation delay and therefore any differences in propagation time which may cause timing offsets.

The receiver amplifier 23 and transmitter drive circuits 22 are interfaced to the transducers 2a,2b and their coupling circuits at a very low impedance which presents minimal differences between transmit and receive configurations of the transducers 2a,2b and their coupling circuits. This minimises measurement offsets caused by changing impedances and resultant phase changes.

The battery (not shown) is typically a lithium thionyl chloride battery.

In order to achieve transducer reciprocity (the same performance on transmit as on receive), the interface to the electronics provided by the coupling circuits is usually either a very high impedance or a very low impedance. The transducer 2a,2b may also have an inductance and resistance added to widen the bandwidth of its response. It is generally accepted that a very low impedance match from the electronics minimises unwanted offsets.

A low ultrasonic frequency signal is used which means that high attenuation problems associated with a fluid such as methane that is used in gas meters are avoided; there is only a small attenuation at a low ultrasonic frequency. The losses in the system are small so only a relatively small voltage is required to transmit and the received signal is quite large giving a good SNR. This makes the circuitry simple and the battery consumption low.

The flow tube 3 preferably includes a plurality of smaller diameter flow passages. The flow passages are each of a small diameter, close to the cut-off frequency, to decrease the acoustic modes. Since a signal burst is being used, the signal is a band of frequencies, centred around the transducer resonant frequency, not a single frequency. In natural gas and methane, the tube is comparable to or smaller than the cut-off frequency of the bandwidth of signals in use.

Since the wavelength of the signal is similar to the transducer diameter, then the transducer acts as almost a point source, not a plane wave generator. Similarly each flow passage also acts as a point source. Accordingly the tube face acoustic obstruction will be minimal as it is small compared to the wavelength, a diffraction pattern will be generated, not a hard reflection. Although path length, and therefore time delay, varies slightly across the width of the plurality of flow passages the instantaneous amplitudes of the phase shifted frequencies in the bandwidth of the signal burst combine. Since the difference in the resultant phases is compared with the sum of the same resultant phases a value proportional to actual flow is obtained.

Preferably, the flow tube 3 includes seven of the above smaller flow passages, six flow passages 4a around a central flow passage 4b, to decrease the pressure drop caused by the gas flow. The individual flow passage 4a, 4b shape is preferably hexagonal because it packs better leaving little wall thickness between tubes, useful for both fluid flow and acoustic performance. The flow passages 4a,4b are parallel axially extending passages.

Each flow passage 4a, 4b could be considered a separate tube of hexagonal cross section with each flow passage 4a having three of its outer walls being coupled to the wall of another adjacent flow passage 4a,4b. The flow passage 4b is located in the centre of the flow passages 4b and therefore each of its outer walls is coupled to the wall of a flow passage 4a. This provides a compact arrangement.

The end of the tube which is proximal the inlet 1a to the housing (i.e. the inlet to the tube 3) has a flange 5 attached to improve the fluid dynamic flow into the tube 3. The flange 5 has a flat surface and extends radially outwards from the outer surface of the tube 3 and around the outer surface of the tube 3. In one embodiment, a single flange is provided at the inlet to the tube 3,

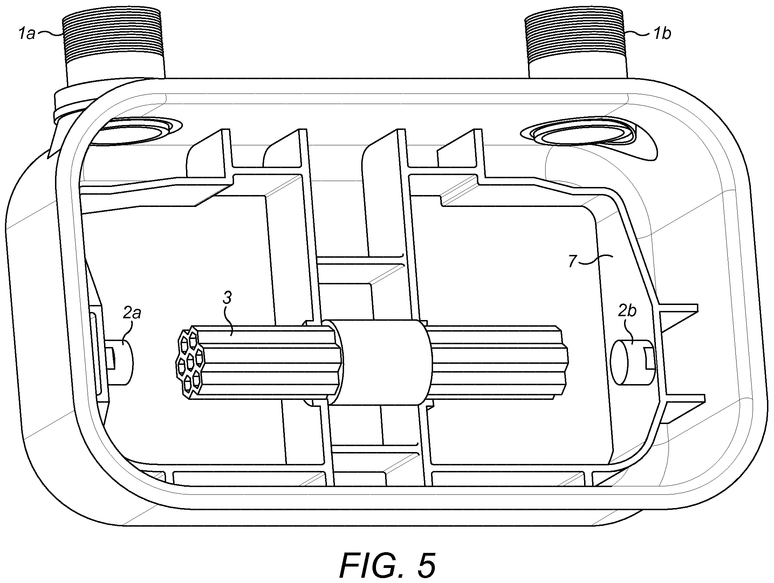

The flange 5 decreases the pressure drop due to poor flow shape at the inlet to the tube 3. To avoid acoustic reflections, which would add into the latter parts of the signal burst causing phase distortion, the flat inlet flange 5 is made of acoustically transparent material. In practice, transparent material, such as open-cell low-density foam, is also slightly absorptive or dissipative but prevents reflections. That is, it is acoustically transparent due to the porosity but creates a physical barrier avoiding reflections. A similar outlet flange 6 located at the other end of the tube 3 avoids reflections but does not have any significant fluid dynamic benefits in view of the direction of fluid flow through the housing. The tube 3 inlet edges may have shaping to improve flow profile. Fig. 5 shows a perspective view of a gas meter similar to Fig. 1 with certain features such as the flanges 5,6 omitted. The same reference numerals are used to show similar features between figures 1 and 5. The tube 3 is shown in position between the transducers 2a, 2b. The transducers 2a,2b are secured internally through a unitary internal structure 7 positioned within the housing of the meter.

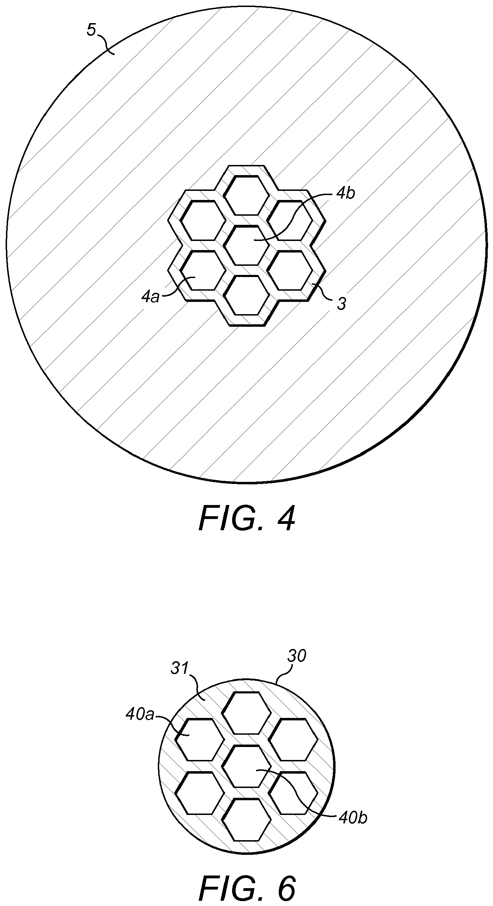

Alternatively, the tube 3 in Fig. 1, 4 and 5 is replaced with a tube 30 shown in Fig. 6. The tube 30 may be provided which includes seven of the above smaller flow passages as in the previous embodiment, that is six flow passages 40a around a central flow passage 40b, to decrease the pressure drop caused by the gas flow. However, the edges of adjacent hexagonal flow passages are not coupled together as in Fig. 2 but instead the passages 40a, 40b are formed in a solid cylindrical tube 31 such that the flow passages form recesses through the tube 31 with each passage 40a, 40b having a hexagonal cross section. The flow passages 40a,40b are parallel axially extending passages through the cylindrical tube 31. The outer surface of the tube 30 may be smooth. An additional flange (not shown) may be provided as in Fig. 2.

In operation, the microcontroller 24 in Fig. 1 works in a sleep / wake mode to preserve battery power, waking at irregular intervals with a short average period to make a measurement. A short period has been determined as an adequate sampling interval to accurately measure the expected flow patterns of a domestic gas supply. Upon waking, a new wake-up interval is determined and a timer preferably integrated in the microcontroller 24 is initiated, the previous wake-up interval being available for the volume calculation. The switching system 21 is set to cause the first transducer 2a to connect to the transmitter 22 output and the second transducer 2b to connect to the receiver 23 amplifier input. A signal burst is generated from the DAC provided in the microcontroller 24 and transmitted from the first transducer 2a, with an amplitude determined from previous firings. The signal is received at the second transducer 2b and captured via an ADC and stored in RAM (both provided in the microcontroller 24).

The data is processed to determine the start point of the burst and its time delay from transmit. Further processing determines the phase of the received data compared to the transmit data. These values are combined to generate the total transit time.

After a short delay to allow echoes and ringing to die away, the switching system 21 reverses the connections to the first and second transducers 2a,2b. A return signal burst is transmitted from the second transducer 2b and received at the first transducer 2a, being captured and stored in RAM as before. This data is processed as before to determine a second transit time.

The downstream transit time will be shorter than the upstream transit time due to the additional velocity of the gas flow. The downstream time is subtracted from the upstream time to yield the transit time difference which is proportional to gas flow velocity.

The SoS is calculated from the average of the upstream and downstream transit times, after subtracting the extra time taken for the signal to pass through the transducers 2a,2b and electronic circuitry 20. This time is measured during calibration and remains substantially constant throughout the life of the meter 10.

The following equations can be used to make the necessary calculations:

$$\text{Gas\_velocity} = \text{transit\_time\_difference} \times \text{SoS}^2 / (2 \times \text{tube\_length}) \quad \ldots\ldots \quad (1)$$

$$\text{Gas\_volume} = \text{gas\_velocity} \times \text{tube\_cross\_sectional\_area} \times$$

$$\text{previous\_wake\_up\_interval} \quad \ldots\ldots \quad (2)$$

If the measurements obtained are credible compared to previous ones then the new incremental volume is added to the ongoing total in an index register provided in the microcontroller 24. Otherwise the result is stored and the previous_wake_up_interval will be added to the next_wake_up_interval in the expectation that the next measurements will either agree with the rejected ones or that they will agree with previous values. If the amplitude of any of the received signals was incorrect (too high or too low) then the transmit gain is modified accordingly for the next wake-up.

Any other pending house-keeping operations or communications are tended to, the microcontroller 24 goes to sleep to await the next wake-up. The sequence begins again from waking of the microcontroller from sleep mode and determining an new wake-up interval but the transducer roles are reversed with the second transducer transmitting initially followed by the first transducer. This helps to remove offsets caused by imbalances due to residual conditions, caused by the initial transmission, on the second transmission. This process continues indefinitely, the transducer roles reversing each time.

Although the above embodiments have been described separately, it will be appreciated by those skilled in the art that they are not mutually exclusive and different aspects of the embodiments may be combined and certain features may be dispensed with when combining embodiments without departing from the scope of the invention.

**Claims**

1. A fluid flow metering apparatus comprising a flow passage (3) within which fluid is adapted to flow, and means for propagating an ultrasonic signal through the flow passage, the propagating means comprising a first transducer (2a) for sending an ultrasonic signal downstream of the flow and a second transducer (2b) for sending a signal upstream of the flow, the apparatus further comprising signal processing circuitry (20) to cause the ultrasonic signal to be transmitted in both directions through the flow passages by the first and second transducers and a processing means (24) to determine information representative of the time of flight of the ultrasonic signals received by the first and second transducers, wherein the signal processing circuitry (20) is operable to provide a drive signal which comprises a band of frequencies and changes its bandwidth with time, narrowing as time elapseswherein the drive signal is chosen to be of duration such that before the end of signal its bandwidth lies within the apparatus bandwidth.

2. The apparatus of claim 1, wherein the drive signal duration is chosen such that it allows the received signal frequency and phase to stabilise and remain stable during the period used for measurement.

3. The apparatus of claim 1 or 2, wherein the drive signal is a low ultrasonic frequency signal.

4. The apparatus of any preceding claim, wherein the drive signal is a sine wave.

5. The apparatus of any preceding claim, wherein the diameter of the flow passage is comparable to or smaller than the cut-off size for the band of frequencies.

6. The apparatus of any preceding claim, wherein the flow structure comprises a plurality of the flow passages.

7. The apparatus of claim 6, wherein each flow passage has a hexagonal cross section (4a, 4b, 40a, 40b), and optionally, there are seven flow passages.

8. The apparatus of claim 6 or 7, wherein the flow passages (4a, 4b) are coupled together to provide the flow structure.

9. The apparatus of any preceding claim, wherein the flow structure comprises an inlet and an outlet and the apparatus further comprises a guide structure (5) at the inlet for guiding the fluid flow into the flow structure.

10. The apparatus of claim 9, wherein the guide structure is an acoustically transparent flange adapted to prevent reflection of the ultrasonic signal from the first transducer.

11. The apparatus of any preceding claim, wherein the first and second transducer are mounted along the longitudinal axis of the flow structure but a predetermined distance away from the flow structure to avoid disturbance of the fluid flow through the meter.

12. The apparatus of any preceding claim, further comprising a valve for controlling the passage of fluid through the metering apparatus, wherein the processing means is adapted to control the operation of the valve.

13. The apparatus of any preceding claim, further comprising a temperature sensor for measuring the temperature of the flowing gas and communicating the temperature measurement to the processing means.

14. The apparatus of any preceding claim, wherein the fluid is gas.

**Patentansprüche**

1. Fluid-Durchflussmessvorrichtung, die einen Durchflusskanal (3), in dem Fluid strömen soll, und ein Mittel zum Ausbreitenlassen eines Ultraschallsignals durch den Durchflusskanal aufweist, wobei das Ausbreitungsmittel einen ersten Messumformer (2a) zum Senden eines Ultraschallsignals stromabwärts des Flusses und einen zweiten Messumformer (2b) zum Senden eines Signal stromaufwärts des Flusses aufweist, wobei die Vorrichtung ferner eine Signalverarbeitungsschaltung (20) zum Veranlassen, dass das Ultraschallsignal von dem ersten und dem zweiten Messumformer in beiden Richtungen durch die Durchflusskanäle übertragen wird, und ein Verarbeitungsmittel (24) zum Bestimmen von Informationen, die für die Laufzeit der von dem ersten und dem zweiten Messumformer empfangenen Ultraschallsignale repräsentativ sind, aufweist, wobei die Signalverarbeitungsschaltung (20) zum Bereitstellen eines Ansteuersignals funktionell ist, das ein Frequenzenband umfasst und seine Bandbreite mit der Zeit verändert, so dass es mit dem Verstreichen der Zeit schmaler wird, wobei das Ansteuersignal so gewählt wird, dass es eine solche Dauer hat, dass seine Bandbreite vor dem Signalende innerhalb der Vorrichtungsbandbreite liegt.

2. Vorrichtung nach Anspruch 1, wobei die Ansteuersignaldauer so gewählt ist, dass sie die Stabilisierung der empfangenen Signalfrequenz und -phase und das Stabilbleiben während der für die Messung verwendeten Zeitspanne zulässt.

3. Vorrichtung nach Anspruch 1 oder 2, wobei das Ansteuersignal ein Signal niedriger Ultraschallfrequenz ist.

4. Vorrichtung nach einem der vorhergehenden Ansprüche, wobei das Ansteuersignal eine Sinuswelle ist.

5. Vorrichtung nach einem der vorhergehenden Ansprüche, wobei der Durchmesser des Durchflusskanals vergleichbar mit der oder kleiner als die Grenzgröße für das Frequenzband ist.

6. Vorrichtung nach einem der vorhergehenden Ansprüche, wobei die Durchflussstruktur mehrere der Durchflusskanäle umfasst.

7. Vorrichtung nach Anspruch 6, wobei jeder Durchflusskanal einen sechseckigen Querschnitt (4a, 4b, 40a, 40b) hat und es wahlweise sieben Durchflusskanäle gibt.

8. Vorrichtung nach Anspruch 6 oder 7, wobei die Durchflusskanäle (4a, 4b) miteinander gekoppelt sind, um die Durchflussstruktur zu ergeben.

9. Vorrichtung nach einem der vorhergehenden Ansprüche, wobei die Durchflussstruktur einen Einlass und einen Auslass aufweist und die Vorrichtung ferner eine Führungsstruktur (5) am Einlass zum Führen des Fluiddurchflusses in die Durchflussstruktur aufweist.

10. Vorrichtung nach Anspruch 9, wobei die Führungsstruktur ein akustisch transparenter Flansch ist, der zum Verhüten des Zurückwerfens des Ultraschallsignals vom ersten Messumformer ausgeführt ist.

11. Vorrichtung nach einem der vorhergehenden Ansprüche, wobei der erste und der zweite Messumformer entlang der Längsachse der Durchflussstruktur, aber in einem vorbestimmten Abstand von der Durchflussstruktur entfernt montiert sind, um die Störung des Fluiddurchflusses durch das Messgerät zu vermeiden.

12. Vorrichtung nach einem der vorhergehenden Ansprüche, die ferner ein Ventil zum Regulieren des Hindurchströmens von Fluid durch die Messvorrichtung aufweist, wobei das Verarbeitungsmittel zum Steuern des Betriebs des Ventils ausgeführt ist.

13. Vorrichtung nach einem der vorhergehenden Ansprüche, die ferner einen Temperatursensor zum Messen der Temperatur des fließenden Gases und zum Übermitteln der Temperaturmessung an das Verarbeitungsmittel aufweist.

14. Vorrichtung nach einem der vorhergehenden Ansprüche, wobei das Fluid Gas ist.

**Revendications**

1. Appareil de mesure de débit de fluide, comprenant un passage d'écoulement (3) dans lequel le fluide est adapté à l'écoulement, et un moyen de propagation d'un signal ultrasonore dans le passage d'écoulement, le moyen de propagation comprenant un premier transducteur (2a) pour l'envoi d'un signal ultrasonore en aval de l'écoulement, et un second transducteur (2b) pour l'envoi d'un signal en amont de l'écoulement, l'appareil comprenant en outre un circuit de traitement de signal (20) destiné à provoquer la transmission du signal ultrasonore dans les deux directions dans le passage d'écoulement par les premier et second transducteurs, et un moyen de traitement (24) destiné à déterminer une information représentative de la durée de vol des signaux ultrasonores reçus par les premier et second transducteurs, le circuit de traitement de signal (20) servant à fournir un signal de commande qui comprend une bande de fréquences et dont la bande passante varie dans le temps, se rétrécissant au fur et à mesure que le temps s'écoule, et le signal de commande étant choisi de manière à avoir une durée telle qu'avant la fin du signal, sa bande passante se trouve dans la bande passante de l'appareil.

2. Appareil selon la revendication 1, dans lequel la durée du signal de commande est choisie afin de permettre à la fréquence et à la phase du signal reçu de se stabiliser et de rester stables pendant la période utilisée pour la mesure.

3. Appareil selon la revendication 1 ou 2, dans lequel le signal de commande est un signal à basse fréquence ultrasonore.

4. Appareil selon l'une quelconque des revendications précédentes, dans lequel le signal de commande est une onde sinusoïdale.

5. Appareil selon l'une quelconque des revendications précédentes, dans lequel le diamètre du passage d'écoulement est inférieur ou égal à la taille de coupure pour la bande de fréquences.

6. Appareil selon l'une quelconque des revendications précédentes, dans lequel la structure d'écoulement comprend une pluralité de passages d'écoulement.

7. Appareil selon la revendication 6, dans lequel chaque passage d'écoulement a une section transversale hexagonale (4a, 4b, 40a, 40b), et qui comprend éventuellement sept passages d'écoulement.

8. Appareil selon la revendication 6 ou 7, dans lequel les passages d'écoulement (4a, 4b) sont raccordés ensemble pour fournir la structure d'écoulement.

9. Appareil selon l'une quelconque des revendications précédentes, dans lequel la structure d'écoulement comprend une entrée et une sortie, l'appareil comprenant en outre une structure de guidage (5) au niveau de l'entrée pour guider l'écoulement de fluide dans la structure d'écoulement.

10. Appareil selon la revendication 9, dans lequel la structure de guidage est un flasque acoustiquement transparent conçu pour empêcher la réflexion du signal ultrasonore en provenance du premier transducteur.

11. Appareil selon l'une quelconque des revendications précédentes, dans lequel les premier et second transducteurs sont montés le long de l'axe longitudinal de la structure d'écoulement, mais à une distance prédéterminée de la structure d'écoulement pour éviter une perturbation de l'écoulement de fluide dans le mesureur.

12. Appareil selon l'une quelconque des revendications précédentes, comprenant en outre un robinet pour réguler le passage de fluide dans l'appareil de mesure, le moyen de traitement étant conçu pour commander le fonctionnement du robinet.

13. Appareil selon l'une quelconque des revendications précédentes, comprenant en outre un capteur de température destiné à mesurer la température de l'écoulement gazeux et à communiquer la mesure de température au moyen de traitement.

14. Appareil selon l'une quelconque des revendications précédentes, dans lequel le fluide est un gaz.

FIG. 1

Vert 0.5V/square     Horiz 100us/square

*FIG. 2*

Vert ADC count     Horiz sample No.

*FIG. 3*

EP 2 722 654 B1

FIG. 4

FIG. 6

FIG. 5

**EP 2 722 654 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2321705 A
- WO 9951944 A